# FASCICULE DE BREVET EUROPEEN

(11) **EP 3 826 818 B1**
(45) Date de publication et mention de la délivrance du brevet: **23.08.2023**
(21) Numéro de dépôt: 19745685.8
(22) Date de dépôt: 17.06.2019
(51) Int. Cl.: B29C 45/14

(54) **PROCEDE DE FABRICATION D'UN ENSEMBLE D'ELEMENTS DE GARNITURE MONTRANT UN REVETEMENT DECORATIF**
VERFAHREN ZUR HERSTELLUNG EINES SATZES VON VERKLEIDUNGSELEMENTEN MIT EINER DEKORATIVEN ABDECKUNG
METHOD FOR PRODUCING A SET OF TRIM ELEMENTS HAVING A DECORATIVE COVERING

(30) Priorité: 26.07.2018 FR 1856942
(43) Date de publication de la demande: 02.06.2021
(73) Titulaire: PSA Automobiles SA, 78300 Poissy (FR)
(72) Inventeur: HUCHE, Thierry, 78113 Conde sur Vesgre (FR)
(86) Numéro de dépôt international: PCT/FR2019/051471
(87) Numéro de publication internationale: WO 2020/021173

(56) Documents cités:
- WO-A1-2016/002999
- JP-A- H02 206 513

## Description

L'invention se situe dans le domaine de l'aménagement intérieur des véhicules. En particulier, l'invention concerne les procédés de fabrication d'éléments de garniture intérieure réalisés à partir d'un matériau multicouche ayant une face d'aspect et une face arrière, tels que par exemple des éléments comprenant une feuille de bois formant la face d'aspect. L'invention a également trait à de tels éléments de garniture intérieure.

Il est connu de réaliser des éléments de garniture de véhicule comprenant une couche en un matériau avec un motif décoratif pouvant être naturel comme une feuille de bois. Le document FR2922137 présente un exemple de procédé pour le revêtement d'une pièce par une couche de bois dans le cadre d'une application aux véhicules automobiles. Les documents JPH02206513 et WO2016002999 décrivent un procédé de fabrication d'un ensemble d'éléments de garniture avec un revêtement décoratif.

Certains éléments de garniture intérieure peuvent se présenter sous forme d'une façade montrant une ouverture débouchant sur un vide-poche et destinée à être fermée par un volet. A ce jour, les différents éléments de garniture sont réalisés séparément ce qui, dans le cadre d'un revêtement décoratif tel que du bois, ne permet pas de répondre à toutes les contraintes en matière de style et, en particulier, au fait qu'il puisse y avoir une correspondance entre les veinages de deux pièces revêtues disposées adjacentes comme c'est le cas lorsqu'un volet vient obturer un ajour d'une façade. L'absence de continuité dans le veinage nuit à la qualité perçue par l'utilisateur final. Il serait donc intéressant de pouvoir trouver une solution à un tel inconvénient.

Par ailleurs, il a été constaté qu'un soin particulier devait être apporté à la finition des éléments de garniture mobiles montrant une face d'aspect décorative, au risque sinon de voir cette dite face être rapidement abîmée par des rayures générées lors de leur manipulation. Ce soin particulier a un coût qu'il serait intéressant de pouvoir réduire.

Il existe donc un besoin pour un procédé de production d'éléments de garniture qui soit économique tout en permettant de fabriquer des éléments de garniture répondant à des exigences élevées en matière de style et de finition.

L'invention a pour objectif de répondre à au moins un des inconvénients rencontrés dans l'art antérieur en proposant un procédé de fabrication d'éléments de garniture répondant aux exigences de style et de finition en un nombre d'étapes réduit.

A cet effet et selon un premier aspect, l'invention a pour objet un procédé de fabrication d'un ensemble d'éléments de garniture présentant un revêtement décoratif avec un motif décoratif et comprenant une partie fixe formant une façade et au moins une partie mobile formant un volet destiné à obturer un ajour de ladite façade, le procédé comprenant une étape de réalisation d'une ébauche de pièce par surmoulage d'une couche de résine thermoplastique ou thermodurcissable sur la face arrière d'une couche d'un matériau de revêtement décoratif comportant le motif décoratif, de telle sorte à ce que ladite ébauche de pièce présente une face d'aspect montrant ledit motif décoratif et une face arrière, le procédé étant remarquable en ce que l'étape de surmoulage se fait par injection et comprend la réalisation d'au moins une rainure de prédécoupe sur tout ou partie du pourtour d'une portion de l'ébauche de pièce destinée à former un volet ; et en ce que ladite ou au moins une des rainures de prédécoupe montre un profil évasé. L'étape de réalisation de l'ébauche de pièce (1) par surmoulage est suivie d'une étape de découpe d'au moins un volet (7) dans ladite ébauche de pièce (1), ladite découpe résultant en un ajour (9) dans le corps de l'ébauche de pièce (1), ledit corps ajouré étant destiné à former une façade (11). Le motif décoratif est en continuité entre le volet et la façade lorsque ledit volet obstrue l'ajour. Le profil d'au moins une rainure de prédécoupe présentant un fond et des parois latérales, au moins une rainure de prédécoupe montre un profil évasé dans lequel la paroi latérale de la rainure de prédécoupe destinée à former tout ou partie du pourtour de l'ajour présente une inclinaison. Cette configuration permet de disposer d'au moins un chanfrein sur le bord de l'ajour lorsque le volet est découpé.

Le profil d'au moins une rainure de prédécoupe présentant un fond et des parois latérales, au moins une rainure de prédécoupe montre un profil évasé de forme trapézoïdale ou semi-circulaire. Sauf lorsque la forme trapézoïdale est droite sur un de ses côtés, l'invention permet de réaliser en simultané des chanfreins à la fois sur le bord de l'ajour et sur le bord du volet disposé en regard.

Au moins une rainure de prédécoupe montrant un profil évasé est agencée parallèlement à un axe de rotation autour duquel le volet est destiné à pivoter en vue de l'obturation ou du dégagement de l'ajour montré par la façade. En effet, selon l'invention, le ou les chanfreins sont préférentiellement présents sur les bords de l'ajour afin de permettre un pivotement du volet sous ledit bord sans risque d'accrochage.

L'invention va découper le volet dans le panneau destiné à former la façade afin d'avoir un suivi du motif décoratif, c'est-à-dire une continuité de motif, entre le ou les volets et la façade dont ils vont obstruer le ou les ajours. Ainsi, lorsque le revêtement décoratif est du bois, l'invention permet de proposer une continuité de motif, tel que dans le veinage du bois, entre la façade et le volet.

Comme on l'aura compris à la lecture de la définition qui vient d'en être donnée, l'invention consiste à utiliser une étape de surmoulage par injection pour former une ébauche de pièce qui sera ensuite découpée. L'invention utilise en outre cette étape de surmoulage pour préformer, sur la face arrière de ladite ébauche de pièce, un chanfrein sur le bord d'un ajour et/ou d'un volet qui va être découpé dans ladite ébauche au cours d'une étape ultérieure. L'invention est remarquable en ce qu'elle permet d'économiser une étape de finition visant à la réalisation d'un ou plusieurs chanfreins qui fait suite à la découpe d'un ajour et/ou d'un volet dans ladite ébauche de pièce. Le ou lesdits chanfreins sont réalisés par moulage et non pas par fraisage. La réalisation de chanfreins sur les bords d'un ajour et/ou d'un volet permet d'éviter ou du moins de limiter les risques d'accroche du volet aux bords de l'ajour présenté par la façade lors des opérations d'ouverture et de fermeture dudit volet et donc les risques de génération de rayures.

De préférence, l'étape de découpe du volet dans l'ébauche de pièce est menée de sorte à former un jeu d'au moins 2 mm entre les bords du volet agencés parallèlement à l'axe de rotation qu'il est destiné à présenter et les bords de l'ajour disposés en regard.

De manière avantageuse, l'étape de surmoulage par injection comprend en outre la réalisation simultanée de moyens de fixation sur la face arrière de l'ébauche de pièce. De préférence, les moyens de fixation comprennent au moins un clip ou un pion formé par injection, et/ou les moyens de fixation comprennent au moins un insert. L'invention permet de doter la façade de chanfreins et des moyens de fixation en une seule étape de surmoulage par injection.

Selon un mode de réalisation préféré, la couche d'un matériau de revêtement décoratif comprend au moins une feuille de bois. De préférence, l'étape de découpe du volet dans l'ébauche de pièce comprend un fraisage en deux passes. La mise en oeuvre de deux passes de fraisage permet à la fois une meilleure finition et de s'affranchir d'une étape de ponçage. Les deux passes se font préférentiellement selon des sens différents.

Avantageusement, le procédé comprend en outre une étape d'application d'un vernis sur ladite face d'aspect de l'ébauche de pièce ; ou une étape d'application d'une couche de résine translucide sur ladite face avant de la couche d'un matériau de revêtement décoratif destinée à former la face d'aspect ; de préférence, ladite application se fait par laminage avant l'étape de surmoulage.

Selon un mode de réalisation préféré, la résine utilisée pour former l'ébauche de pièce dans l'étape de surmoulage est une résine thermoplastique choisie parmi l'acrylonitrile butadiène styrène (ABS), le polypropylène (PP), le polyphtalamide (PPA), le polyétheréthercétone (PEEK), polysulfure de phénylène (PPS), le polyamide-imide (PAl), le polyetherimide (PEI), le polyarylamide (PAA), et/ou le polyamide (PA). De préférence, la résine est chargée avec des fibres de renforcement sélectionnées parmi les fibres de verre, de carbone, de céramique, de graphite, de bambou, et/ou de polymères organiques. Dans un mode de réalisation préféré, la couche en matériau thermoplastique est en acrylonitrile butadiène styrène chargé en fibres de verre.

Selon un deuxième aspect, l'invention a pour objet une ébauche de pièce réalisée par surmoulage d'une couche de résine thermoplastique ou thermodurcissable sur la face arrière d'une couche d'un matériau de revêtement décoratif lors de la mise en oeuvre d'un procédé selon le premier aspect, ladite ébauche de pièce comprenant un corps présentant une face d'aspect et une face arrière, ladite ébauche de pièce étant destinée à être transformée en une façade et au moins un volet par découpe d'au moins un volet dans son corps, l'ébauche de pièce étant remarquable en ce que sa face arrière présente au moins une rainure de prédécoupe sur tout ou partie du pourtour de la portion de son corps destinée à être découpée pour former un volet ; et en ce que ladite ou au moins une des rainures de prédécoupe montre un profil évasé. De préférence, la ou au moins une des rainures de prédécoupe est formée par injection lors de ladite étape de surmoulage.

Selon un troisième aspect, l'invention a pour objet un ensemble d'éléments de garniture comprenant une partie fixe formant une façade et au moins une partie mobile formant un volet destiné à obturer un ajour de ladite façade, l'ensemble étant remarquable en ce qu'il a été fabriqué par le procédé selon le premier aspect ou à partir d'une ébauche de pièce selon le deuxième aspect. Un chanfrein réalisé par moulage se distingue d'un chanfrein réalisé par fraisage par l'absence de marques de fraisage.

Selon un quatrième aspect, l'invention a pour objet un véhicule remarquable en ce qu'il comprend un ensemble d'éléments de garniture selon le troisième aspect. De préférence, le volet est destiné à l'obturation d'un vide-poche.

L'invention sera bien comprise et d'autres aspects et avantages apparaîtront clairement au vu de la description qui suit, donnée à titre d'exemple en référence aux planches de dessins annexées sur lesquelles :
- La figure 1 est une vue d'une ébauche de pièce selon l'invention depuis sa face d'aspect.
- La figure 2 est une vue d'un ensemble d'éléments de garniture selon l'invention.
- Les figures 3, 4 et 6 sont des exemples de profils de rainures de prédécoupe pouvant être utilisés dans le cadre de l'invention.
- La figure 5 est une figure similaire à la figure 4 mais illustrant la présence de chanfreins issus des rainures de prédécoupe sur l'ensemble d'éléments après découpe.
- Les figures 7 et 8 illustrent la qualité de finition donnée par la présence de chanfreins résultant de la formation de rainures de prédécoupe.
- La figure 9 est une vue analogue à la figure 8 mais sans l'invention, c'est-à-dire sans rainures de prédécoupe et donc sans chanfreins.

Dans la description qui suit, le terme « comprendre » est synonyme de « inclure » et n'est pas limitatif en ce qu'il autorise la présence d'autres étapes dans le procédé auquel il se rapporte ou d'autres éléments dans l'ébauche de pièce ou l'ensemble d'éléments de garniture auquel il se rapporte. Il est entendu que le terme « comprendre » inclut les termes « consister en ». Sur les différentes figures, les mêmes références désignent des éléments identiques ou similaires.

L'invention se rapporte à un procédé de fabrication d'un ensemble d'éléments de garniture présentant un revêtement décoratif et comprenant une partie fixe formant une façade et au moins une partie mobile formant un volet destiné à obturer un ajour de ladite façade.

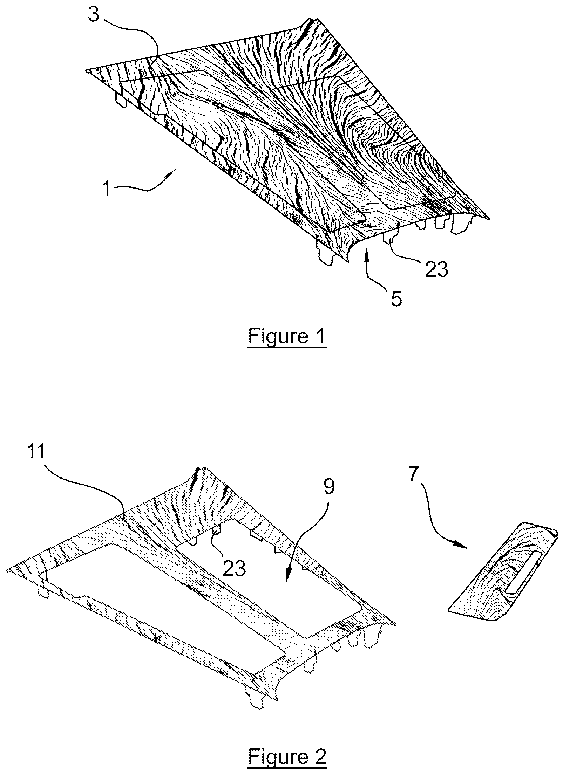

Le procédé selon l'invention comprend une étape de réalisation d'une ébauche de pièce 1 par surmoulage d'une couche 3 de résine thermoplastique ou thermodurcissable sur la face arrière d'une couche 5 d'un matériau de revêtement décoratif de telle sorte à ce que ladite ébauche de pièce 1 présente une face d'aspect et une face arrière. Une telle ébauche de pièce est représentée en figure 1. Selon l'invention, l'étape de surmoulage se fait par injection et comprend la réalisation d'au moins une rainure de prédécoupe (non représentée en figure 1) sur tout ou partie du pourtour de la portion de l'ébauche de pièce destinée à former un volet ; et en ce que ladite ou au moins une des rainures de prédécoupe montre un profil évasé.

De manière avantageuse, le procédé selon l'invention comprend en outre une étape de découpe d'au moins un volet 7 dans ladite ébauche de pièce, ladite découpe résultant en un ajour 9 dans le corps de l'ébauche de pièce, ledit corps ajouré étant destiné à former une façade 11. Selon un mode de réalisation préféré, la couche 5 d'un matériau de revêtement décoratif est une couche comprenant au moins une feuille de bois. De préférence, l'étape de découpe du volet 7 dans l'ébauche de pièce 1 comprend un fraisage en deux passes pour améliorer le rendu final au niveau des bords découpés. La couche comprenant au moins une feuille de bois peut être formée d'au moins deux feuilles de bois collées ensemble et agencées pour que l'orientation de leurs fibres soit différente l'une par rapport à l'autre.

De préférence, la ou les rainures de prédécoupe ainsi formées par moulage montrent un profil évasé dans lequel au moins une paroi latérale de la rainure de prédécoupe destinée à former tout ou partie du pourtour de l'ajour présente une inclinaison.

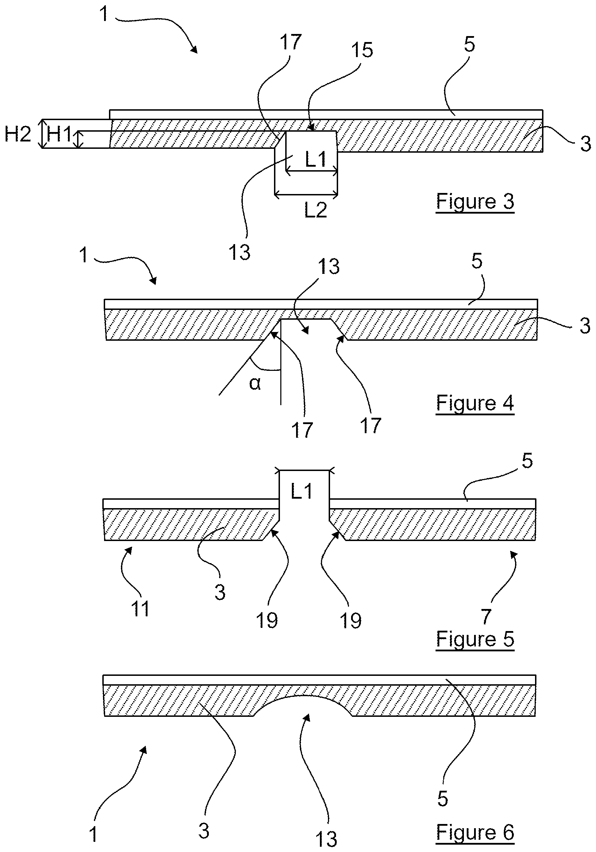

Un exemple de profil d'une rainure 13 de prédécoupe est illustré en figure 3 dans laquelle une seule des parois latérales 17 montre une inclinaison. La figure 3 est une vue partielle en coupe d'une ébauche de pièce 1 selon l'invention. On peut voir que l'opération de surmoulage a permis de réaliser une rainure 13 de prédécoupe de forme évasée en ce que la paroi formant son fond 15 présente une largeur L1 inférieure à la largeur L2 de l'ouverture formée à la surface de la face arrière.

On notera que la profondeur H1 de la rainure 13 de prédécoupe est inférieure à la hauteur H2 de la couche de la résine thermoplastique ou thermodurcissable, ce qui permet la réalisation de la rainure par injection. Sur la figure 3, le profil de la rainure de prédécoupe est un trapèze droit de sorte que le chanfrein n'est créé que d'un seul côté de la rainure 13 de prédécoupe.

La figure 4 illustre un autre exemple de réalisation d'une rainure 13 de prédécoupe selon l'invention dont le profil montre une forme trapézoïdale dont les deux parois latérales 17 sont inclinées d'un angle α, des chanfreins seront donc créés des deux côtés de la rainure 13 de prédécoupe. La figure 5 est une vue similaire à celle de la figure 4 mais après l'opération de découpe au cours de laquelle l'ébauche de pièce est transformée en une façade 11 et un volet 7. On voit que la largeur L1 du fond de la rainure de prédécoupe va préférentiellement définir la largeur du jeu entre le bord de l'ajour présenté par la façade et le bord du volet disposé en regard. On voit également que les chanfreins 19 sont créés par les murs latéraux de la rainure de prédécoupe et non pas par l'opération de fraisage.

La figure 6 illustre un autre exemple de réalisation d'une rainure 13 de prédécoupe selon l'invention dont le profil montre une forme semi-circulaire.

De préférence, quel que soit le profil de rainure 13 de prédécoupe choisi, l'étape de découpe du volet dans l'ébauche de pièce est menée de sorte à former un jeu d'au moins 2 mm entre les bords du volet agencés parallèlement à l'axe de rotation qu'il est destiné à présenter et les bords de l'ajour disposés en regard ; de préférence d'au moins 2.5 mm.

De manière avantageuse, l'étape de surmoulage par injection comprend en outre la réalisation simultanée de moyens de fixation 23 sur la face arrière de l'ébauche de pièce 1 (illustrés en figure 1). De préférence, les moyens de fixation 23 comprennent au moins un clip ou un pion formé par injection, et/ou les moyens de fixation 23 comprennent au moins un insert.

Avantageusement, le procédé comprend en outre une étape d'application d'un vernis sur ladite face d'aspect de l'ébauche de pièce 1. Le vernis utilisé peut-être un vernis classique, par exemple à base de polyuréthane, de polyester ou un vernis cellulosique. Il est également possible de recouvrir l'ébauche de pièce par une mince couche de résine de synthèse comme décrit dans le document FR2922137.

De manière alternative, le procédé peut comprendre une étape d'application d'une couche de résine translucide sur ladite face avant de la couche d'un matériau de revêtement décoratif destinée à former la face d'aspect. De préférence, ladite application se fait par laminage avant l'étape de surmoulage. Ladite résine translucide peut éventuellement comprendre un colorant et/ou présenter des caractéristiques filtrantes d'ultraviolets. L'application d'une telle couche de résine translucide sur la face d'aspect d'un élément de garniture comprenant au moins une feuille de bois est décrite dans le document FR2868733. Eventuellement, l'étape d'application d'une couche de résine translucide sera suivie par des opérations de compression et de thermoformage réalisées avant l'étape de surmoulage.

Selon un mode de réalisation préféré, la résine utilisée pour former l'ébauche de pièce 1 dans l'étape de surmoulage est une résine thermoplastique choisie parmi l'acrylonitrile butadiène styrène (ABS), le polypropylène (PP), le polyphtalamide (PPA), le polyétheréthercétone (PEEK), polysulfure de phénylène (PPS), le polyamide-imide (PAl), le polyetherimide (PEI), le polyarylamide (PAA), et/ou le polyamide (PA).

Les résines thermodurcissables utilisées peuvent être sélectionnées parmi les résines polyépoxydes, les résines polyester insaturés, les résines vinylester, les copolymères tels que les *résines polyester-vinylester.

De préférence, la résine est chargée avec des fibres de renforcement sélectionnées parmi les fibres de verre, de carbone, de céramique, de graphite, de bambou, et/ou de polymères organiques tels que des fibres de polyester.

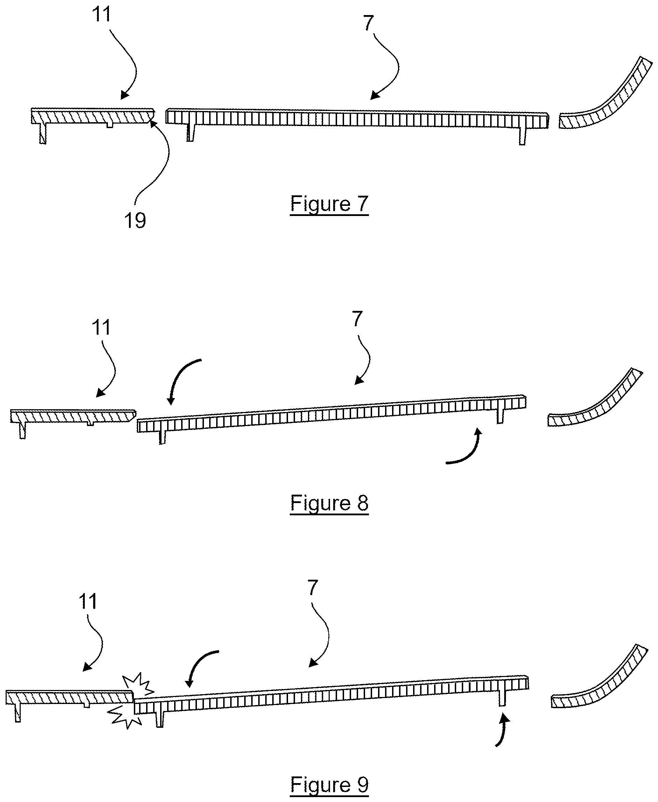

Les figures 7 à 9 illustrent les avantages liés à la réalisation d'un chanfrein sur le bord de l'ajour de la façade 11, l'ajour étant obturé par un volet 7 pouvant dégager l'ouverture par rotation. La figure 7 est une représentation partielle en coupe d'un ensemble d'éléments de garniture (7, 11) articulés l'un par rapport à l'autre. En particulier, le volet 7 est configuré pour pouvoir pivoter afin de dégager une ouverture dans l'élément 11 pour permettre, par exemple, l'accès à un vide-poche. Sur la figure 8, on voit que la finition est parfaite, le volet 7 peut s'enfoncer lors de son mouvement d'ouverture par pivotement sans toucher les bords de la façade. Au contraire, comme illustré par la figure 9, en l'absence de chanfreins, la finition laisse à désirer et le volet 7 touche les bords de la façade 11, ce qui va le dégrader et réduire la qualité perçue. Une opération de finition supplémentaire est donc nécessaire. La mise en oeuvre du procédé selon l'invention permet de s'affranchir de cette étape supplémentaire de finition rendant le procédé plus économique.

## Revendications

1. Procédé de fabrication d'un ensemble d'éléments de garniture (7, 11) présentant un revêtement décoratif avec un motif décoratif et comprenant une partie fixe formant une façade (11) et au moins une partie mobile formant un volet (7) destiné à obturer un ajour (9) de ladite façade (11), le procédé comprenant une étape de réalisation d'une ébauche de pièce (1) par surmoulage d'une couche (3) de résine thermoplastique ou thermodurcissable sur la face arrière d'une couche (5) d'un matériau de revêtement décoratif comportant le motif décoratif, de telle sorte à ce que ladite ébauche de pièce (1) présente une face d'aspect montrant ledit motif décoratif et une face arrière, l'étape de surmoulage se faisant par injection et comprenant la réalisation d'au moins une rainure (13) de prédécoupe sur tout ou partie du pourtour d'une portion de l'ébauche de pièce (1) destinée à former un volet (7), ; ladite ou au moins une des rainures (13) de prédécoupe montrant un profil évasé, et l'étape de réalisation de l'ébauche de pièce (1) par surmoulage étant suivie d'une étape de découpe d'au moins un volet (7) dans ladite ébauche de pièce (1), ladite découpe résultant en un ajour (9) dans le corps de l'ébauche de pièce (1), ledit corps ajouré étant destiné à former une façade (11), **caractérisé en ce que** le profil d'au moins une rainure (13) de prédécoupe présentant un fond (15) et des parois latérales (17), au moins une rainure (13) de prédécoupe :
- montre un profil évasé dans lequel la paroi latérale (17) de la rainure (13) destinée à former tout ou partie du pourtour de l'ajour (9) présente une inclinaison ; et
- montre un profil évasé de forme trapézoïdale ou semi-circulaire ;
- ledit un profil évasé étant agencée parallèlement à un axe de rotation autour duquel le volet (7) est destiné à pivoter en vue de l'obturation ou du dégagement de l'ajour (9) montré par la façade (11),
le motif décoratif étant en continuité entre le volet (7) et la façade (11) lorsque ledit volet obstrue l'ajour.

2. Procédé selon l'une des revendications 1, caractérisé en ce l'étape de découpe du volet (7) dans l'ébauche de pièce (1) est menée de sorte à former un jeu d'au moins 2 mm entre les bords du volet (7) agencés parallèlement à l'axe de rotation qu'il est destiné à présenter et les bords de l'ajour (9) disposés en regard.

3. Procédé selon l'une des revendications 1 à 2, **caractérisé en ce que** l'étape de surmoulage par injection comprend en outre la réalisation simultanée de moyens de fixation (23) sur la face arrière de l'ébauche de pièce (1) ; de préférence, les moyens de fixation comprennent au moins un clip ou un pion formé par injection, et/ou les moyens de fixation (23) comprennent au moins un insert.

4. Procédé selon l'une des revendications 2 ou 3, **caractérisé en ce que** la couche (5) d'un matériau de revêtement décoratif comprend au moins une feuille de bois ; de préférence, l'étape de découpe du volet (7) dans l'ébauche de pièce (1) comprend un fraisage en deux passes.

5. Procédé selon l'une des revendications 1 à 4, le procédé est **caractérisé en ce qu'**il comprend en outre :
- une étape d'application d'un vernis sur ladite face d'aspect de l'ébauche de pièce (1); ou
- une étape d'application d'une couche de résine translucide sur ladite face avant de la couche (5) d'un matériau de revêtement décoratif destinée à former la face d'aspect ; de préférence, ladite application se fait par laminage avant l'étape de surmoulage.

6. Procédé selon l'une des revendications 1 à 5, **caractérisé en ce que** la résine utilisée pour former l'ébauche de pièce (1) dans l'étape de surmoulage est une résine thermoplastique choisie parmi l'acrylonitrile butadiène styrène (ABS), le polypropylène (PP), le polyphtalamide (PPA), le polyétheréthercétone (PEEK), polysulfure de phénylène (PPS), le polyamide-imide (PAl), le polyetherimide (PEI), le polyarylamide (PAA), et/ou le polyamide (PA) ; de préférence, la résine est chargée avec des fibres de renforcement sélectionnées parmi les fibres de verre, de carbone, de céramique, de graphite, de bambou, et/ou de polymères organiques.

7. Ebauche de pièce (1) réalisée par surmoulage d'une couche (3) de résine thermoplastique ou thermodurcissable sur la face arrière d'une couche (5) d'un matériau de revêtement décoratif lors de la mise en oeuvre d'un procédé selon l'une des revendications 1 à 6, ladite ébauche de pièce (1) comprenant un corps présentant une face d'aspect et une face arrière, ladite ébauche de pièce (1) étant destinée à être transformée en une façade (11) et au moins un volet (7) par découpe d'au moins un volet (7) dans son corps, l'ébauche de pièce (1) étant **caractérisée en ce que** sa face arrière présente au moins une rainure (13) de prédécoupe sur tout ou partie du pourtour de la portion de son corps destinée à être découpée pour former un volet (7) ; et **en ce que** ladite ou au moins une des rainures (13) de prédécoupe montre un profil évasé ; de préférence, la ou au moins une des rainures (13) de prédécoupe est formée par injection lors de ladite étape de surmoulage.

8. Ensemble d'éléments de garniture (7, 11) comprenant une partie fixe formant une façade (11) et au moins une partie mobile formant un volet (7) destiné à obturer un ajour (9) de ladite façade (11), l'ensemble étant **caractérisé en ce qu'**il a été fabriqué par le procédé selon l'une des revendications 1 à 6, ou à partir d'une ébauche de pièce (1) selon la revendication 7.

9. Véhicule **caractérisé en ce qu'**il comprend un ensemble d'éléments de garniture (7, 11) selon la revendication 8.

## Patentansprüche

1. Verfahren zur Herstellung eines Satzes von Verkleidungselementen (7, 11), die eine dekorative Beschichtung mit einem dekorativen Muster aufweisen und einen festen Teil, der eine Fassade (11) bildet, und mindestens einen beweglichen Teil, der eine Klappe (7) bildet, zum Verschließen einer Öffnung (9) der Fassade (11) umfassen, wobei das Verfahren einen Schritt zur Herstellung eines Werkstückrohlings (1) durch Aufgießen einer Schicht (3) aus thermoplastischem oder wärmehärtbarem Harz auf die Rückseite einer Schicht (5) aus einem dekorativen Beschichtungsmaterial, das das dekorative Muster aufweist, umfasst, sodass der Rohling Teil (1) mit einer Auftrittsfläche, die das dekorative Muster zeigt, und einer Rückseite, wobei der Schritt des Übergießens durch Spritzgießen erfolgt und das Herstellen mindestens einer Vorschneidenut (13) auf dem gesamten Umfang oder einem Teil des Umfangs eines Abschnitts des Werkstückrohlings (1) umfasst, der dazu bestimmt ist, eine Klappe (7) zu bilden; und wobei die mindestens eine der Vorschneidenuten (13) ein aufgeweitetes Profil aufweist, und wobei auf den Schritt des Herstellens des Werkstückrohlings (1) durch Übergießen ein Schritt des Schneidens mindestens einer Klappe (7) in den Werkstückrohling folgt (1), wobei der Ausschnitt in einem Durchbruch (9) im Körper des Werkstückrohlings (1) resultiert, wobei der durchbrochene Körper dazu bestimmt ist, eine Fassade (11) zu bilden, **dadurch gekennzeichnet, dass** das Profil mindestens einer Vorschneidenut (13) einen Boden (15) und Seitenwände (17), mindestens eine Vorschneidenut (13) aufweist:
- ein aufgeweitetes Profil aufweist, bei dem die Seitenwand (17) der Nut (13) zur Bildung des gesamten Umfangs oder eines Teils des Umfangs der Durchbrechung (9) geneigt ist, und/oder
- ein trapezförmiges oder halbkreisförmiges erweitertes Profil aufweist;
- Das erfindungsgemäße Erweiterungsprofil ist parallel zu einer Drehachse angeordnet, um die die Klappe (7) zum Verschließen oder Freigeben des von der Fassade (11) gezeigten Durchbruchs (9) schwenkbar ist,
das dekorative Muster ist eine Kontinuität zwischen der Klappe (7) und der Fassade (11), wenn die Klappe die Durchbrechung blockiert.

2. Verfahren nach einem der Ansprüche 1, **dadurch gekennzeichnet, dass** der Schritt des Schneidens der Klappe (7) in den Werkstückrohling (1) derart durchgeführt wird, dass ein Spiel von mindestens 2 mm zwischen den Rändern der Klappe (7), die parallel zu der Drehachse, die sie darstellen soll, angeordnet sind, und den Rändern der Öffnung (9), die gegenüberliegend angeordnet sind, gebildet wird.

3. Verfahren nach einem der Ansprüche 1 bis 2, **dadurch gekennzeichnet, dass** der Schritt des Spritzgießens ferner das gleichzeitige Anbringen von Befestigungsmitteln (23) an der Rückseite des Werkstückrohlings (1) umfasst; vorzugsweise umfassen die Befestigungsmittel mindestens einen Clip oder einen Spritzstift, und/oder die Befestigungsmittel (23) umfassen mindestens einen Einsatz.

4. Verfahren nach einem der Ansprüche 2 oder 3, **dadurch gekennzeichnet, dass** die Schicht (5) aus einem dekorativen Beschichtungsmaterial mindestens eine Holzfolie umfasst; vorzugsweise umfasst der Schritt des Schneidens der Klappe (7) in den Werkstückrohling (1) ein Fräsen in zwei Durchgängen.

5. Verfahren nach einem der Ansprüche 1 bis 4, **dadurch gekennzeichnet, dass** es ferner umfasst:
- einen Schritt zum Auftragen eines Lackes auf die Außenfläche des Werkstückrohlings (1) oder
- Ein Schritt des Aufbringens einer lichtdurchlässigen Harzschicht auf die vordere Seite der Schicht (5) aus einem dekorativen Beschichtungsmaterial, das dazu bestimmt ist, die Erscheinungsfläche zu bilden; vorzugsweise wird der Schritt des Aufbringens durch Walzen vor dem Schritt des Übergießens durchgeführt.

6. Verfahren nach einem der Ansprüche 1 bis 5, **dadurch gekennzeichnet, dass** das zur Bildung des Werkstückrohlings (1) in der Überformstufe verwendete Harz ein thermoplastisches Harz ist, das unter Acrylnitril-Butadien-Styrol (ABS), Polypropylen (PP), Polyphthalamid (PPA), Polyetheretherketon (PEEK), Polyphenylensulfid (PPS), Polyamidimid (PAI), Polyetherimid (PEI), Polyarylamid (PAA) und/oder Polyamid (PA) ausgewählt ist; vorzugsweise Harz wird mit Verstärkungsfasern gefüllt, die aus Glas-, Kohlenstoff-, Keramik-, Graphit-, Bambus- und/oder organischen Polymerfasern ausgewählt sind.

7. Werkstückrohling (1), der durch Aufgießen einer Schicht (3) aus thermoplastischem oder wärmehärtbarem Harz auf die Rückseite einer Schicht (5) aus einem dekorativen Beschichtungsmaterial bei der Durchführung eines Verfahrens nach einem der Ansprüche 1 bis 6 hergestellt ist, wobei der Werkstückrohling (1) einen Körper mit einer Auftrittsfläche und einer Rückseite umfasst, wobei der Werkstückrohling (1) dazu bestimmt ist, durch Ausschneiden mindestens einer Klappe (7) in seinem Körper in eine Fassade (11) und mindestens eine Klappe (7) umgeformt zu werden, wobei der Werkstückrohling (1) **dadurch gekennzeichnet** ist ihre Rückseite mindestens eine Vorschneidenut (13) auf dem gesamten Umfang oder einem Teil des zur Bildung einer Klappe (7) zu schneidenden Körperabschnitts aufweist; und dass die mindestens eine Vorschneidenut (13) ein aufgeweitetes Profil aufweist; vorzugsweise wird die mindestens eine Vorschneidenut (13) im Übergießschritt durch Spritzgießen gebildet.

8. Satz von Verkleidungselementen (7, 11), der einen festen Teil, der eine Fassade (11) bildet, und mindestens einen beweglichen Teil, der eine Klappe (7) bildet, zum Verschließen einer Öffnung (9) der Fassade (11), umfasst, wobei der Satz **dadurch gekennzeichnet ist, dass** er durch das Verfahren nach einem der Ansprüche 1 bis 6 oder aus einem Werkstückrohling (1) nach Anspruch 7 hergestellt worden ist.

9. Fahrzeug, **dadurch gekennzeichnet, dass** es einen Satz von Verkleidungselementen (7, 11) nach Anspruch 8 umfasst.

## Claims

1. Method for manufacturing a set of trim elements (7, 11) having a decorative coating with a decorative pattern and comprising a fixed part forming a front (11) and at least one movable part forming a flap (7) intended to close an opening (9) of said front (11), the method comprising a step of producing a part blank (1) by overmolding a layer (3) of thermoplastic or thermosetting resin on the rear face of a layer (5) of decorative coating material comprising the decorative pattern, such that said part blank (1) has a face of an aspect showing said decorative pattern and a rear face, wherein the overmolding step is performed by injection and comprises the making of at least one pre-cutting groove (13) over all or part of the periphery of a portion of the part blank (1) intended to form a flap (7); and said or at least one of the pre-cutting grooves (13) showing a flared profile, and the step of making the part blank (1) by overmolding being followed by a step of cutting at least one flap (7) in said part blank (1), said cutting resulting in an opening (9) in the body of the blank (1), said perforated body being intended to form a front (11), **characterized in that** the profile of at least one precut groove (13) having a bottom (15) and side walls (17), at least one precut groove (13):
- shows a flared profile in which the side wall (17) of the groove (13) intended to form all or part of the periphery of the opening (9) has an inclination; and/or
- shows a flared profile of trapezoidal or semicircular shape;
- said flared profile is arranged parallel to an axis of rotation about which the flap (7) is intended to pivot with a view to closing or disengaging the opening (9) shown by the facade (11),
the decorative pattern being in continuity between the flap (7) and the facade (11) when said flap obstructs the opening.

2. Process according to one of claims 1, **characterized in that** the step of cutting the flap (7) in the blank of the part (1) is carried out so as to form a clearance of at least 2 mm between the edges of the flap (7) arranged parallel to the axis of rotation which it is intended to present and the edges of the opening (9) arranged opposite.

3. Process according to one of claims 1 to 2, **characterized in that** the injection molding step further comprises simultaneously producing fixing means (23) on the rear face of the blank (1); preferably, the fixing means comprise at least one clip or a peg formed by injection molding, and/or the fixing means (23) comprise at least one insert.

4. Process according to either of claims 2 and 3, **characterized in that** the layer (5) of decorative coating material comprises at least one sheet of wood; preferably, the step of cutting the flap (7) in the blank of the part (1) comprises a two-pass milling operation.

5. Process according to one of claims 1 to 4, the process is **characterized in that** it further comprises:
- step of applying a varnish on said appearance face of the blank part (1); or
- step of applying a translucent resin layer to said front face of the layer (5) of a decorative coating material to form the appearance face; preferably, said application is done by rolling before the overmolding step.

6. Process according to one of claims 1 to 5, **characterized in that** the resin used to form the part blank (1) in the overmolding step is a thermoplastic resin chosen from acrylonitrile butadiene styrene (ABS), polypropylene (PP), polyphthalamide (PPA), polyetheretherketone (PEEK), polyphenylene sulfide (PPS), polyamide-imide (PAI), polyetherimide (PEI), polyarylamide (PAA) and/or polyamide (PA); preferably, the resin is loaded with selected reinforcing fibers among glass, carbon, ceramic, graphite, bamboo, and/or organic polymer fibers.

7. A blank for a part (1) produced by overmolding a layer (3) of thermoplastic or thermosetting resin on the rear face of a layer (5) of decorative coating material during the implementation of a process according to one of claims 1 to 6, the said blank for the part (1) comprising a body having an appearance face and a rear face, the said blank for the part (1) being intended to be transformed into a facade (11) and at least one flap (7) by cutting at least one flap (7) in its body, the blank for the part (1) being **characterized in that** its rear face has the at least one precut groove (13) on all or part of the periphery of the portion of its body intended to be cut to form a flap (7); and **in that** said or at least one of the precut grooves (13) has a flared profile; preferably, the or at least one of the precut grooves (13) is formed by injection during said overmolding step.

8. Assembly of trim elements (7, 11) comprising a fixed part forming a front (11) and at least one movable part forming a flap (7) intended to close an opening (9) of the said front (11), the assembly being **characterized in that** it has been manufactured by the method according to one of claims 1 to 6, or from a blank piece (1) according to claim 7.

9. Vehicle **characterized in that** it comprises a set of lining elements (7, 11) according to claim 8.
